# EUROPEAN PATENT SPECIFICATION

(11) **EP 3 061 207 B1**
(45) Date of publication and mention of the grant of the patent: **08.08.2018**
(21) Application number: 13782705.1
(22) Date of filing: 23.10.2013
(51) Int. Cl.: H04L 12/24, H04L 12/26, H04L 29/08, G06F 9/50

(54) **LOAD BALANCING IN A DISTRIBUTED NETWORK MANAGEMENT ARCHITECTURE**
LASTAUSGLEICH IN EINER VERTEILTEN NETZVERWALTUNGSARCHITEKTUR
RÉPARTITION DE LA CHARGE DANS UNE ARCHITECTURE DE GESTION RÉSEAU DISTRIBUÉE

(43) Date of publication of application: 31.08.2016
(73) Proprietor: Telefonaktiebolaget LM Ericsson (publ), 164 83 Stockholm (SE)
(72) Inventor: FALLON, Liam, Athlone Co. Westmeath (IE); ACHUTHAN, Sajeevan, Athlone Co. Westmeath (IE)
(74) Representative: Ericsson
(86) International application number: PCT/EP2013/072195
(87) International publication number: WO 2015/058796

(56) References cited:
- WO-A2-2011/117193
- M K Bandara ET AL: "A Self-forming Network Management Topologies in the Madeira Management System", LNCS, 21 June 2007 (2007-06-21), pages 61-72, XP055115529, Retrieved from the Internet: URL:http://download.springer.com/static/pd f/817/chp%3A10.1007%2F978-3-540-72986-0_6. pdf?auth66=1398851263_ac4658d0b1632589d230 24ffd7576bb1&ext=.pdf [retrieved on 2014-04-28]
- LISANDRO ZAMBENEDETTI GRANVILLE ET AL: "MANAGING COMPUTER NETWORKS USING PEER-TO-PEER TECHNOLOGIES", IEEE COMMUNICATIONS MAGAZINE, IEEE SERVICE CENTER, PISCATAWAY, US, vol. 43, no. 10, 1 October 2005 (2005-10-01), pages 62-68, XP001236530, ISSN: 0163-6804

## Description

### Technical Field

The present invention relates to a method and apparatus for distributing network management processing load across a plurality of network management processing elements of a cluster. The network may for example be a communications network. The present invention also relates to a computer program product configured, when run on a computer, to carry out a method for distributing network management processing load across a plurality of network management processing elements of a cluster.

### Background

In recent years, there has been a significant increase in the number of network elements being managed by mobile network management systems. In GSM systems for example, the number of network elements has tended to be of the order of hundreds of network elements. In LTE, networks with hundreds of thousands of network elements may not be uncommon. Mobile networks are also increasingly heterogeneous and may be running multiple different radio technologies including 2G, WCDMA, LTE and Wireless LAN. Complex radio architectures may be put in place to support mobile networks, architectures including macro, micro, pico, and femto cells.

The computers on which management systems for such networks run have also evolved, with many computing entities now being run in a highly distributed manner, often deployed on blade systems using a cloud approach. Such distributed infrastructures often have support for the substantially seamless addition or removal of computing elements form the cloud, and for the adjustment of both physical and virtual machines allocated to the cloud.

Management systems for communication networks have developed to take advantage of the above discussed distributed architectures. Such management systems allow the processing power of the distributed infrastructure to be harnessed in order to manage large heterogeneous mobile communication networks. Individual management applications are frequently designed to scale horizontally: many instances of the application are run in parallel in separate processes, with each instance of the application carrying the load of a small portion of the managed network. The capacity of the management application can thus be adjusted simply by increasing or decreasing the number of instances of the application that are running at any given time. The processing load for the entire communications network may be balanced across the different instances of a management application, for example by dividing the network elements evenly across all instances of the application, or by measuring the load being generated by each network element, and planning distribution of the load based on these measurements.

Current approaches to ongoing load balancing in distributed computing platforms focus on providing support in the distributed computing infrastructure that allows applications to elastically increase and decrease the number of instances they are running. In the case of communications network management however, the semantics used between network management applications and the network elements they control render the practical implementation of such support highly challenging. In general, management applications use stateful session semantics to interact with network elements. An application establishes a management session with a network element, carries out some operations and then closes the session. Such management sessions may be used to collect statistical information, carry out configuration operations or receive event streams. A particular instance of a management application is generally required to handle a particular network element for the duration of a particular management session. Certain management sessions, including for example those for alarm or event collection can be very long lived, complicating the redistribution of network elements among management application instances for the purposes of load balancing.

In a managed network, management applications may be notified of the addition or removal of network elements by amendments to the application's topology, by an incoming connection from a previously unknown network element, or by discovering the network element. Management applications may be informed of changes to the number of management instances of the application by the management application topology and by the underlying distributed computing platform. Each time a network element is added to or removed from the network, the configuration of a management application instance is amended and that instance is re-initialised. When the number of instances in the management application is adjusted, the configuration of a number of instances in the application is amended and each of those instances is re-initialised. As noted above, the session oriented semantics used between management applications and controlled network elements mean that such amendment and reinitialisation of instances can be problematic. In order to change the allocation of a network element from one management application instance to another, the management session between the network element and the "old" management instance must be shut down and a management session must be established between the managed element and the "new" management instance.

Current systems address the difficulties of load balancing in management application instances either through the manual allocation of network elements to management application instances, or through the use of centralised algorithms. Execution of redistribution between management application instances must thus be centrally controlled, requiring coordination of a single operation across all concerned network elements and application instances. Each amended application instance must be shut down, its new configuration set and the instance must be restarted. Such procedures are unwieldy and highly difficult to automate owing at least in part to the high degree of coordination required across all amended network elements. The complex load balancing algorithms required in the centralised procedure are difficult to implement, and in the event of failure of an application instance, the load carried by that instance cannot be automatically reallocated among other instances. L. Fallon et al., "Self-forming Network Management Topologies in the Madeira Management System", LNCS, 21 June 2017, pages 61-72 (XP055115529) discloses a cluster-based network management architecture whereby the role of cluster head is allocated dynamically to members of the cluster.

### Summary

It is an aim of the present invention to provide a method and apparatus which obviate or reduce at least one or more of the disadvantages mentioned above.

According to a first aspect of the present invention, there is provided a method of distributing network management processing load across a plurality of network management processing elements. Each network management processing element is a member of a cluster, one member being a head of the cluster updating the cluster state, and members of the cluster following the cluster state. The method comprises the cluster head monitoring the network management processing load across the members of the cluster, and, upon detecting that the cluster load is unbalanced, the cluster head updating the cluster state to initiate automatic rebalancing of the network management processing load across at least a subset of the plurality of members of the cluster, once tasks being processed by the subset of the plurality of members have been completed.

In some examples, automatic rebalancing of the network management processing load across at least a subset of the plurality of members of the cluster may take place once all tasks being processed by the subset of the plurality of members have been completed.

Unbalanced cluster load may be detected as a consequence of domain activity including for example new or removed network elements, changes in functions activated on network elements, or changes in the states of network elements. Alternatively or in addition, unbalanced cluster load may be detected as a consequence of cluster activity, including for example change in cluster membership following addition or removal of members, or changes in the network management processing load being handled by individual cluster members.

In some examples, the subset of the cluster may comprise all members of the cluster. In other examples, the subset may comprise fewer than all members of the cluster.

In some examples, the step of rebalancing the network management processing load may comprise suspending operation of each member of the subset of the plurality of members upon completion of processing of current tasks, and automatically rebalancing the network management processing load upon suspension of all members of the subset. Suspending operation may comprise suspending initiation of new tasks while current tasks are completing.

In some examples, the step of automatically rebalancing the load may comprise adding network management processing elements to the subset from a pool of started members of the cluster, or removing network management processing elements from the subset to the pool of started members of the cluster.

In further examples, members may be started up and added to, or stopped and removed from, the pool according to specified pool maximum and minimum occupancy limits. Members of the pool may comprise network management processing elements that have been started but do not have any network management processing load allocated to them.

In some examples, the step of automatically rebalancing the load may comprise at least one member of the subset running a load balancing algorithm to set the network management processing load handled by the network management processing element according to processing load data shared between cluster members.

In some examples, the method may further comprise detecting that the cluster has changed state from a first state to a second state, and changing the state of members of the cluster from the first state to the second state once tasks being processed have been completed. In some examples, the first state may be a *running* state and the second state may be a *suspended* state.

In some examples, the step of changing the state of cluster members may comprise suspending operation of members of the cluster upon completion of processing of current tasks, and changing the state of members of the cluster from the first state to the second state.

In some examples, the method may further comprise checking the cluster state on occurrence of a trigger event, wherein a trigger event may comprise at least one of expiry of a time period or a network event. In some examples, the time period may be a repeating time period, such that checking the cluster state is carried out on a periodic basis, which basis may be superseded in certain examples by occurrence of a network event.

According to another aspect of the present invention, there is provided a computer program product configured, when run on a computer, to execute a method according to the first aspect of the present invention. Examples of the computer program product may be incorporated into an apparatus such as a network management processing element. The computer program product may be stored on a computer-readable medium, or it could, for example, be in the form of a signal such as a downloadable data signal, or it could be in any other form. Some or all of the computer program product may be made available via download from the internet.

According to another aspect of the present invention, there is provided a method of distributing the processing for controlling a communication network. The network comprises a plurality of nodes, and is controlled by a cluster of a plurality of processing elements, each processing element being a member of a cluster. One member of the cluster is a head of the cluster updating the cluster state, and members of the cluster follow the cluster state. The method comprises conducting steps according to the first aspect of the present invention.

According to another aspect of the present invention, there is provided a network management processing element operating as a member of a cluster comprising a plurality of network management processing elements, one member of the cluster being a head of the cluster configured to update the cluster state. The network management processing element comprises a detector configured to detect updating of the cluster state, and a load balancer configured to rebalance the network management processing load handled by the network management processing element with reference to at least a subset of the plurality of members of the cluster once tasks being processed by the subset of the plurality of members have been completed.

In some examples, the processing element may further comprise an element state manager configured to suspend operation of the element.

In some examples, the detector may be configured to detect that the cluster has changed state from a first state to a second state, and the element state manager may be configured to change the state of the network management processing element from the first state to the second state once tasks being processed have been completed.

In some examples, the load balancer may be configured to run a load balancing algorithm to set the network management processing load handled by the network management processing element according to processing load data shared between cluster members.

In some examples, the network management processing element may further comprise a checking unit configured to check the cluster state on occurrence of a trigger event, wherein a trigger event comprises at least one of expiry of a time period or a network event. The detector may be configured to detect updating of the cluster state on the basis of information provided to the detector by the checking unit.

In some examples, the network management processing element may further comprise a monitor configured to monitor the network management processing load across the members of the cluster, and a cluster state manager configured to update the cluster state on detecting that the monitored network processing load is unbalanced.

In some examples, the network management processing element may further comprise an identity unit configured to determine if the network management processing element is to operate as the cluster head.

According to another aspect of the present invention, there is provided a network management processing element operating as cluster head of a cluster comprising a plurality of network management processing elements. The network management processing element comprises a monitor configured to monitor the network management processing load across the members of the cluster, and a cluster state manager configured to update the cluster state on detecting that the monitored network processing load is unbalanced.

According to a further aspect of the present invention, there is provided a network management processing element operating as a member of a cluster comprising a plurality of network management processing elements, one member of the cluster being a head of the cluster configured to update the cluster state. The network management processing element comprises a processor and a memory, the memory containing instructions executable by the processor whereby the network management processing element is operative to detect updating of the cluster state, and rebalance the network management processing load handled by the network management processing element with reference to at least a subset of the plurality of members of the cluster once tasks being processed by the subset of the plurality of members have been completed. The aforementioned aspects of the present invention are meant to be examples. The present invention is defined only by the appended independent claims, and advantageous embodiments of the present invention are described in the dependent claims.

### Brief Description of the Drawings

For a better understanding of the present invention, and to show more clearly how it may be carried into effect, reference will now be made, by way of example, to the following drawings in which:
Figure 1 is a flow chart illustrating steps in a method for distributing network management processing load;
Figure 2 is a flow chart illustrating how steps in the method of Figure 1 may be realized;
Figure 3 is a simplified block diagram of functional units in a network management processing element;
Figure 4 is a simplified block diagram of another network management processing element;
Figure 5 is a representation of data shared amongst members of a cluster;
Figures 6a and 6b are flow charts illustrating steps in methods for start up and shut down of cluster members;
Figure 7 is a state diagram illustrating cluster and member states;
Figure 8 is a flow chart illustrating steps in state management process;
Figure 9 is a flow chart illustrating steps in a cluster state management process, which may be performed as part of the state management process of Figure 8; and
Figure 10 is illustrates execution of an example of a method for distributing network management processing load.

### Detailed Description

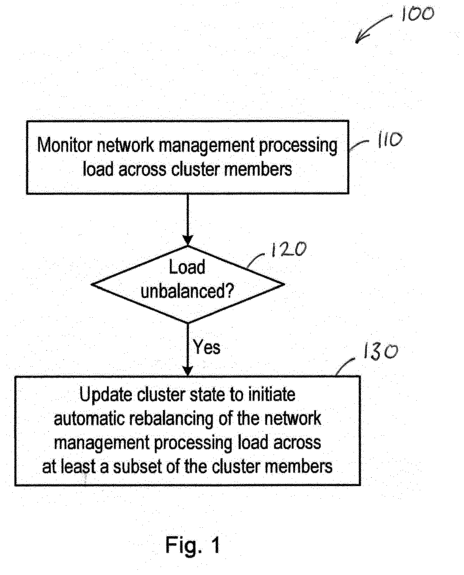

Aspects of the present invention provide a method for distributing network management processing load across a plurality of network management processing elements. Examples of the method allow for decentralised dynamic load balancing of network management processing load across multiple instances of a network management application. Figure 1 is a flow chart illustrating steps in such a method 100. Each network management processing element may be running a single instance of a network management application, and each processing element is a member of a cooperating cluster. One member of the cluster is a cluster head and updates a state of the cluster. Individual members of the cluster follow the cluster state.

With reference to Figure 1, in a first step 110, the cluster head monitors network management processing load across cluster members. The cluster head then determines, in step 120, if the cluster load is unbalanced. This determination may be made on the basis of domain and/or cluster rules specifying events and/or processing load measurements indicating load imbalance. If the cluster load is unbalanced (Yes in step 120), the cluster head updates the cluster state at step 130 to initiate automatic rebalancing of the network management processing load across at least a subset of the plurality of members of the cluster, once tasks being processed by the subset of the plurality of members have been completed.

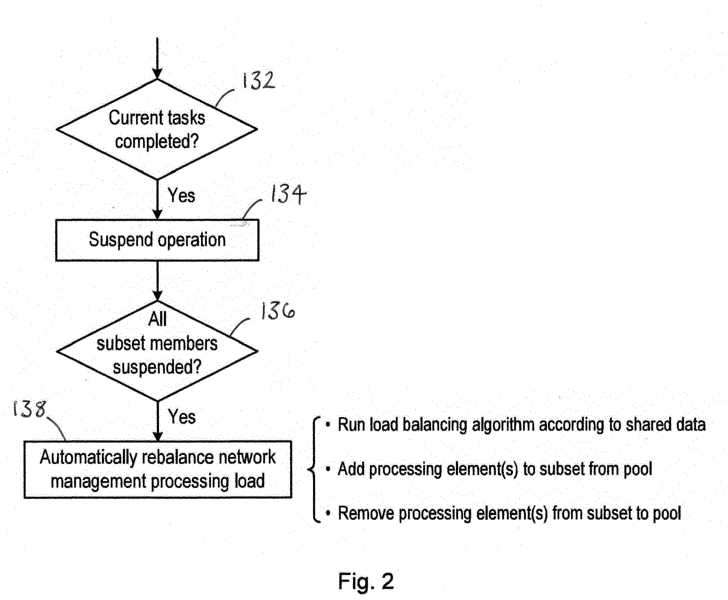

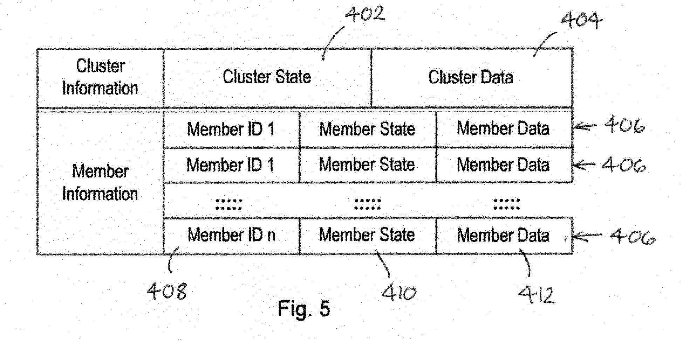

Figure 2 illustrates sub steps that may take place in order to realise the automatic rebalancing of step 130. With reference to Figure 2, in a step 132, a cluster member determines if current tasks have been completed. This may include all or a subset of current tasks, as discussed in further detail below. Once current tasks have been completed (Yes at step 132), the cluster members suspends operation in step 134 and waits until all members of the subset across which load is to be balanced have been suspended. Suspension of members may be indicated by a change in member state. Once all subset members have been suspended (Yes at step 136), the cluster member proceeds to automatically rebalance network management processing load amongst members of the subset at step 138. Automatically rebalancing may comprise at least one member of the subset running a load balancing algorithm to set its network management processing load according to processing load data shared between cluster members. Alternatively, or in addition, rebalancing may comprise adding processing elements to the subset from a pool of started but unloaded elements, or removing elements from the subset to the pool. Each of these steps is discussed in further detail below with reference to Figures 5 to 10.

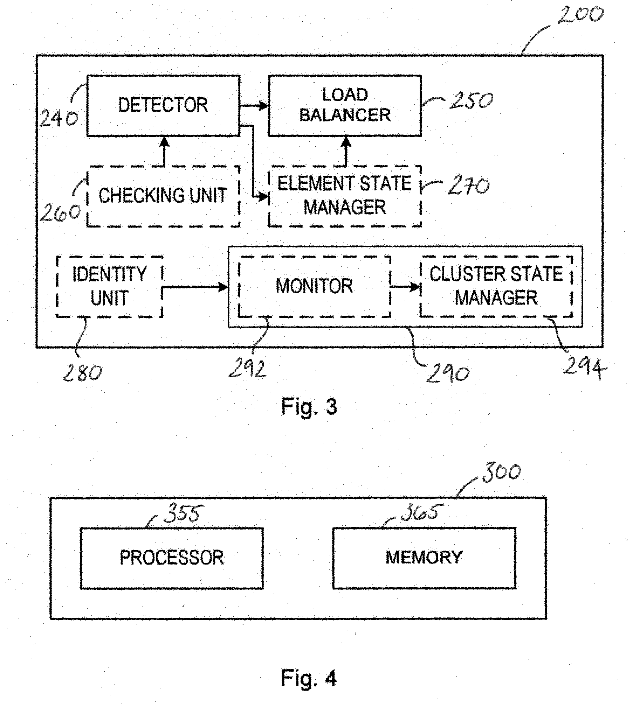

Apparatus for conducting the method described above, for example on receipt of suitable computer readable instructions, may be incorporated within network management processing elements. Figure 3 illustrates functional units in a network management processing element 200 which may execute the steps of Figures 1 and 2, for example according to computer readable instructions received from a computer program. It will be understood that the units illustrated in Figure 3 are functional units, and may be realised in any appropriate combination of hardware and/or software.

With reference to Figure 3, the network management processing element 200 comprises a detector 240 and a load balancer 250. The element may further comprise a checking unit 260, an element state manager 270, an identity unit 280, a monitor 292 and a cluster state manager 294. The monitor 292 and cluster state manager 294 may be grouped together in a cluster management unit 290.

The detector 240 is configured to detect that a cluster state has been updated. The detector 240 may detect an update in cluster state on the basis of information provided by the checking unit 260, which may be configured to make a periodic check of the cluster state and inform the detector 240 of the cluster state, so allowing the detector 240 to detect an update of cluster state from a previous state to a new state. The load balancer 250 is configured to effect load balancing of network processing load between members of a subset of the cluster. The load balancer 250 may be configured to run a load balancing algorithm to set its network management processing load according to processing load data shared between cluster members. The network management processing load may be set on the basis of members of the subset including one or more members that may be added from or removed to a pool of members that are stated but do not have any allocated load. The detector 240 initiates load balancing by the load balancer 250 on detecting an updated state of the cluster. This initiation may be conducted by way of the element state manager 270. The element state manager may be configured, on receipt of information from the detector 250, to suspend operation of the element once current tasks have been completed, and then to update the state of the element to reflect the updated state of the cluster. Once all members of the subset have a state reflecting that of the cluster, the state element manager may trigger the load balancer 250 to conduct load balancing.

As discussed above, one member of the cluster is a cluster head, and updates the state of the cluster. Any member of the cluster may operate as cluster head, and the element 200 may comprise an identity unit 280, which may be configured to determine if the element 200 is required to function as the cluster head. This may be determined on the basis of algorithms programmed in the identity unit 280. The element 200 may further comprise a monitor 292 and cluster state manager 294, grouped together in a cluster management unit 290. If the identity unit 280 determines that the element 200 is required to operate as the cluster head, the identity unit 280 may be configured to instruct the cluster management unit 290 to run monitoring and cluster state management. The monitor 292 may be configured to monitor network management processing load across the cluster members, and the cluster state manager 294 may be configured to update cluster status on the basis of the monitored cluster load. The functionality of the units of the processing element 200 is described in greater detail below with reference to Figures 5 to 10.

Referring to Figure 4, in another example, a network management processing element 300 may comprise a processor 355 and a memory 365. The memory 355 contains instructions executable by the processor 365 such that the processing element 300 is operative to conduct the steps of Figures 1 and 2 described above.

Operation of the method of Figures 1 and 2, for example executed by processing elements according to Figures 3 and 4, is now described in greater detail.

As discussed above, aspects of the present invention involve load balancing of network management processing load between at least a subset of members of a cluster. Each network management processing element may be running a single instance of a network management application, and each processing element is a member of a cooperating cluster. Each cluster member operates autonomously, sharing state and data information with all other members of the cluster. Cluster state and data is then used to coordinate load balancing across members of the cluster. In the following discussion, load balancing among a subset comprising all cluster members is explained as an example, although balancing among a subset comprising only some cluster members may also be accomplished by the method, as discussed in later examples.

The state and data information shared between cluster members is illustrated in Figure 5. The overall state of the management application is represented by the cluster state 402, and any common data useful to coordinate load balancing is held as cluster data 404. Cluster data may include the current list of network elements being managed by the application, the level of imbalance in the load being borne by individual cluster members that may be tolerated before a rebalancing is triggered, the level of load below which cluster members may be deactivated, or the level of load above which cluster members may be activated.

A record 406 for each member of the cluster is held as shared information, visible to all cluster members. The Member ID 408 uniquely identifies a member in the cluster, and the Member State 410 represents the state of the identified member at a given instant. Member data 412 is any data specific to a member such as the current list of network elements being managed by that member. Information is shared among cluster members using any appropriate method of distributed information sharing. Appropriate methods for distributed information sharing may include distributed hash maps or Inter Process Communication (IPC) between cluster members.

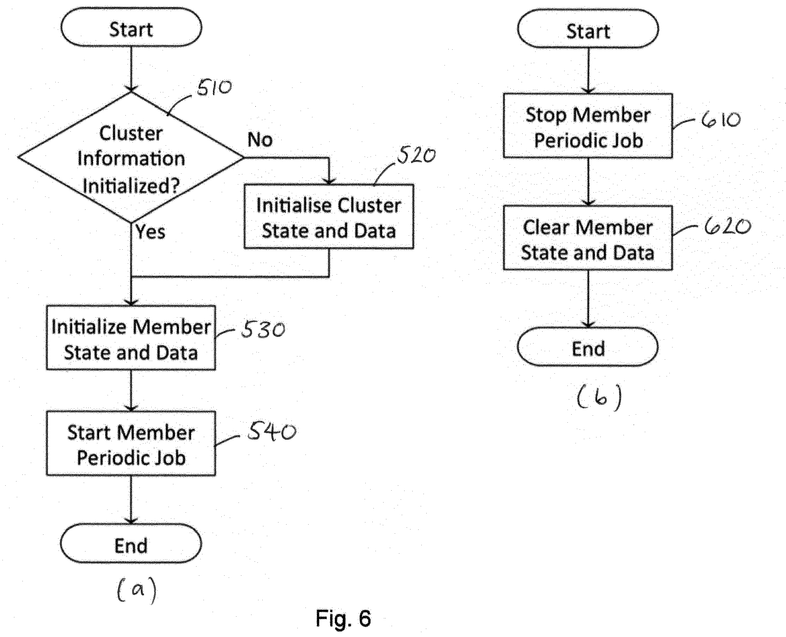

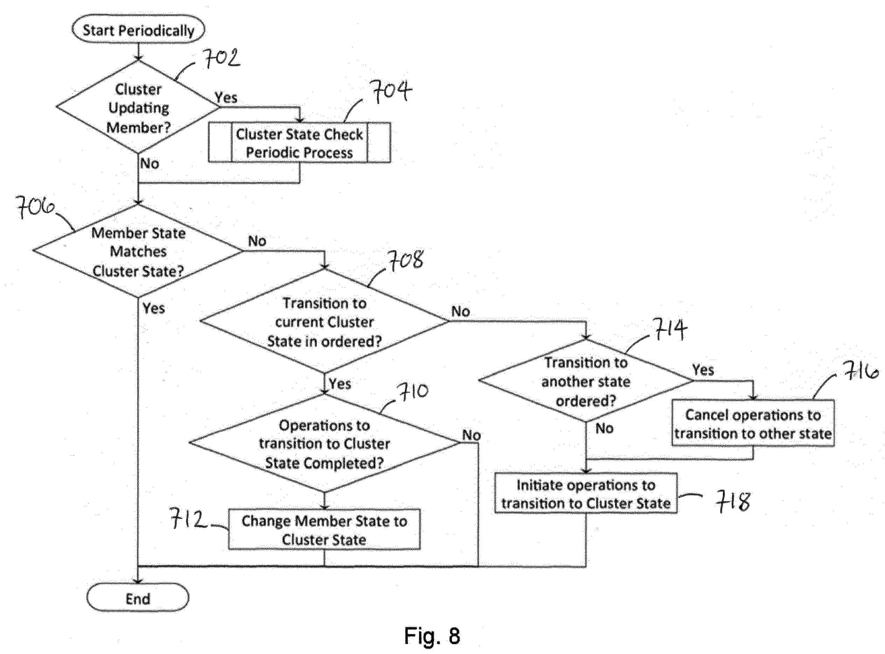

Each cluster member may be started up or shut down according to cluster load at any given time. The sequences for member start up 500 and shut down 600 are illustrated in Figures 6a and 6b. With reference to Figure 6a, when a cluster member starts it first checks in step 510 if cluster information has been initialized. If cluster information has not been initialised (No at step 510), this cluster member is the first member to start, and it initializes the cluster state and data in the shared information at step 520. The cluster member then initializes its member state and data in step 530 and stores that information in the shared information, indexed by its unique identifier. If the cluster member determines in step 510 that cluster data has already been initialised (Yes in step 510), then the member proceeds directly to initialise its state and data in step 530. The cluster member then starts a periodic process in step 540, which runs at fixed intervals to monitor and update its state. This periodic process is discussed further below with reference to Figure 8.

Referring to Figure 6b, when a cluster member shuts down, the cluster member first stops its periodic process in step 610. The cluster member then clears its member state and data from the shared cluster information in step 620.

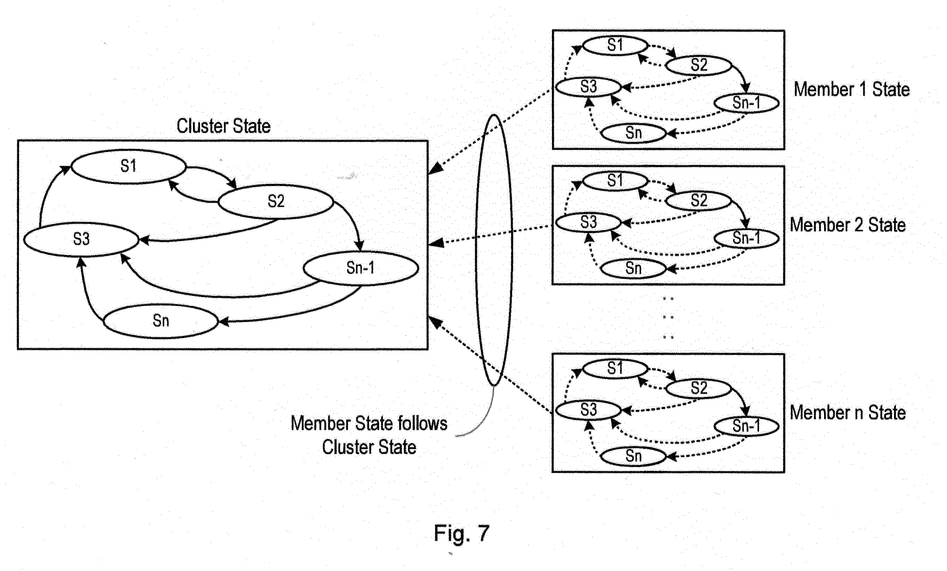

As mentioned above, the state of individual cluster members follows the state of the cluster to which they belong. This is achieved via the periodic process of Figure 8 and the effect is illustrated in Figure 7. The cluster state effectively leads the state of the cluster members, with the current cluster state being set as the desired next state of the cluster members. With reference to Figure 7, if the cluster state transitions from state S2 to state Sn-1, members in the cluster will also transition from state S2 to state Sn-1, executing whatever particular operations are necessary to execute that transition. In some examples, all members of the cluster may transition to the cluster state. In other examples, the cluster state change may be set to apply only to certain members of the cluster. The cluster data may for example be updated to state which members of the cluster are implicated in the cluster state change.

In some examples operation, the cluster state will not transition from a state Sx to another state Sy until all cluster members have the initial state Sx. Therefore, if a cluster state transition occurs from state S1 to state S2 and onto state Sn-1, the cluster state will generally not transition to state Sn-1 until all desired cluster members have reached state S2. In abnormal cases such as resetting to clear errors, the cluster state may transition to an initial state S1, forcing all cluster members to also reset. In other examples, a cluster member may abort attempts to update its state to the cluster state in the event that the cluster state is changed again. Thus if the cluster state changes from state S1 to state S2 and onto state Sn-1, and at the time of the change from state S2 to state Sn-1, a cluster member has still not transitioned from state S1 to state S2, the cluster member may abort attempts to transition to state S2 and initiate attempts to transition to state Sn-1.

Each cluster member manages its state autonomously and asynchronously, monitoring the cluster state without any reference to other cluster members and without synchronizing with other members. As long as the cluster state does not change, the cluster member need not carry out any actions.

Cluster members follow the state of the cluster by periodically running a state management sequence as illustrated in Figure 8. According to this sequence, the cluster member periodically checks the status of the cluster, determines whether or not the cluster state has been updated and if so, acts to update its own state to match that of the cluster. The state management sequence may be run by the processor 355 of the element 300 or by the element state manager 270, in cooperation with the checking unit 260, detector 240, identity unit 280 and cluster management unit 290 of the element 200.

Referring to Figure 8, in a first step 702, the cluster member checks whether it is required to operate as the cluster head, updating the cluster state. At a given time, only one cluster member operates as the cluster head, having responsibility for monitoring network management processing load across the cluster and updating the cluster status. The rule for determining which cluster member is to operate as the cluster head should identify a single running cluster member in a manner in which cluster members can execute autonomously at run time. Two possible rules are to use the cluster member with the lowest ID or the oldest cluster member, both of which can be determined by a cluster member at run time by examining the shared data illustrated in Figure 5. Should a member acting as cluster head be shut down, this will be reflected in the cluster data (as indicated in Figure 6b) and the selection rule will cause a different member to determine that it is to operate as cluster head next time the process of Figure 8 is run. The rule for determining which cluster member is to operate as the cluster head may be stored in the processor of element 300 or in the identity unit 280 of the element 200.

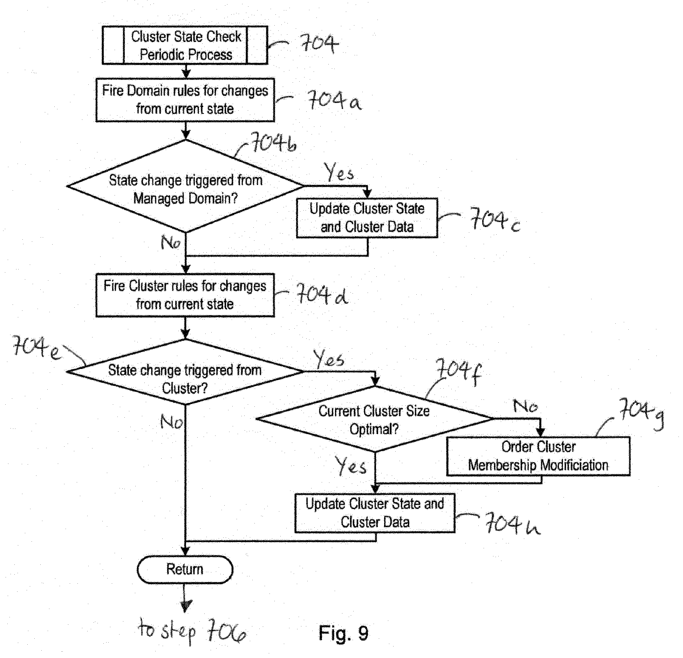

If a cluster member determines that it is required to act as the cluster head (Yes at step 702), the cluster member proceeds at step 704 to conduct the cluster state check periodic process illustrated in Figure 9 and described below. Following completion of the cluster state check periodic process, the cluster member proceeds to check, in step 706, if the cluster member's individual state matches the cluster state. If the cluster member determines at step 702 that it is not required to act as the cluster head (No at step 702), it may proceed directly to step 706. If the cluster member state matches the cluster state (Yes at step 706), then no further action is required on the part of the member and the process may end. However, if the cluster member determines at step 706 that its state does not match the cluster state (No at step 706), the cluster member proceeds, at step 708, to check whether a transition to the current cluster state has already been ordered by a previous iteration of the state management process. If a transition to the new cluster state has already been ordered (Yes in step 708), the member checks, at step 710 if all operations required to execute the transition to the new state have completed. If all required operations are complete (Yes at step 710), the cluster member updates its state in step 712 and exits the process.

Returning to step 708, if transition to the new state has not already been ordered (No at step 708), the member then checks, at step 714, whether transition to a state other than the new cluster state has already been ordered. If this is the case (Yes at step 714), the cluster member cancels operations to transition to that state at step 716 and then proceeds at step 718 to initiate operations to transition to the new cluster state. The member then exits the process. If no other state transition has been ordered (No at step 714), the member may proceed directly to step 718, initiating operations to transition to the new cluster state. Subsequent iterations of the state management procedure will check if the initiated operations have been completed and if so, will set the new state of the cluster member.

One example of a state transition is a transition from a *running* state to a *suspended* state to initiate and as preparation for load balancing. Operations to execute this transition may include cancelling any tasks that are in progress on management sessions towards network elements and terminating sessions towards those network elements. The precise operations required to enable a cluster member to enter the *suspended* state may depend upon the management application running on the cluster member. In some cases, it may be necessary to carry out complex transaction oriented shutdown of sessions with network elements to achieve an ordered shutdown. In other cases, a simple disconnection of a communication channel may suffice. In further examples, a compromise may be reached in which an attempt is made to shutdown sessions to the network elements in an orderly manner but if the sessions fail to terminate in a certain time, the connection may be timed out and the state transition effected regardless of the completion state of the remaining tasks. Tasks which are required to complete before entering a *suspended* state may include for example file transfer of statistics or of charging data from a network element to the management application. When a transition to a *suspended* state is ordered, a cluster member may defer any new file transfers but complete any ongoing transfers before suspending operations.

Another example of a state transition is a transition from a *suspended* state to a *running* state. The operation to make this transition may include load balancing, running an autonomous load balancing algorithm for the cluster member that allows it to calculate and set its management load using the shared data. The operation concludes by establishing a management session to each network element and commencing management tasks towards the network element.

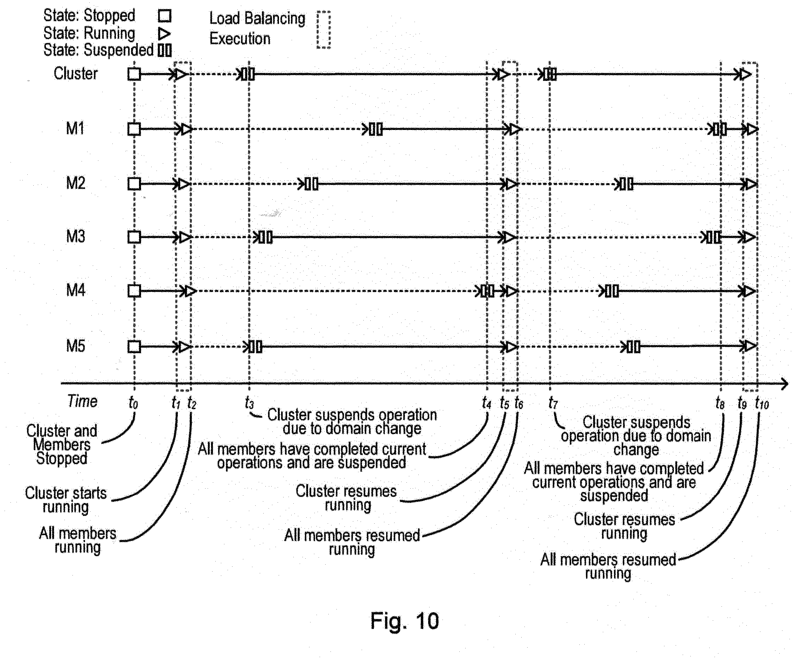

In further examples, the running of a load balancing algorithm may be prompted by determining that all members of the subset amongst which processing load is to be balanced have entered the *suspended* state. For example, cluster members may check the member state data in the shared data of the cluster. Once all required subset cluster members have entered the *suspended* state, load balancing may be conducted through each cluster member running its autonomous load balancing algorithm. Once a cluster member has terminated its load balancing algorithm, it may set a flag in the shared data indicating that load balancing is complete. Once all relevant flags have been set, the cluster head, and hence cluster members, may transition back to the *running* state. Example transitions between running and *suspended* states are discussed in further detail with reference to Figure 10.

A simple example of a load balancing algorithm is for a cluster member to determine its position in the set of running cluster members and to manage a set of network elements based on that position. Thus, if there were 10,000 network elements to manage and 10 cluster members, the sixth cluster member would mange network element 6000 to 6999. Other algorithms can be envisaged and the management application may stipulate the algorithm to be used. Cluster members execute their load balancing algorithms autonomously and according to some examples completely independently. In other examples, peer communication between cluster members may be used as part of load rebalancing.

Figure 9 illustrates the cluster state check periodic process that is executed by the cluster head as part of the state management process of Figure 8. The cluster state check periodic process may be conducted by the processor of the element 300 or by the cluster management unit of the element 200. Referring to Figures 8 and 9, if a cluster member determines at step 702 that it is required to act as cluster head, then it proceeds at step 704 to execute the cluster state check periodic process, illustrated in Figure 9. In a first step 704a, the cluster head fires management domain rules for changes on the current state. These rules allow the cluster head to determine, in step 704b, if a cluster state change is required on the basis of the managed domain. Rules that may trigger a state change on the basis of the managed domain include new or removed network elements, changes in functions activated on network elements, or changes in the states of network elements. Rules may be set such that a state change is triggered at a certain time of day. In this manner, it may be ensured that, even if new network elements are detected, they may be introduced to the system only at certain times of day. The domain rules may be stored as part of the shared cluster data, so as to be accessible to all cluster members, as any cluster member may operate as cluster head according to the particular algorithms for selecting cluster head.

If a state change is triggered from the domain (Yes at step 704b), the cluster state is updated by the cluster head at step 704c. Cluster data may also be updated by the cluster head at step 704c. Typical domain cluster data may include a new list of network elements to be managed and event rate statistics for those network elements. Cluster members may use this data when executing their autonomous load balancing algorithms.

The cluster head then proceeds, at step 704d, to fire rules to determine if a state change is warranted from a cluster point of view. If a state change was not warranted from a domain point of view (No at step 704b) the cluster head may proceed directly to step 704d. The cluster rules allow the cluster head to determine, in step 704e, if a cluster state change is required on the basis of the cluster. Cluster rules may be set to determine whether cluster membership has changed due to addition or removal of members and whether the current management load is sufficiently evenly balanced. The cluster rules may also be stored as part of the shared cluster data.

If a cluster state change is triggered from the cluster (Yes at step 704e), the cluster head then proceeds to determine, at step 704f, whether the current cluster size is optimal. If it is appropriate to add or remove members from the cluster (No at step 704f), the cluster head proceeds at step 704g to order cluster membership modification by the underlying distributed computing mechanism. This may include stating up cluster members as a result of heavy overall load or shutting down cluster members in periods of light overall load. If cluster membership modification is not required (Yes at step 704f), or once it has been ordered at step 704g, the cluster head proceeds to update the cluster state at step 704h. Cluster data may also be updated at step 704h with parameters for cluster members to use when executing their autonomous load balancing algorithm.

Once the cluster state has been updated in step 704h, the cluster head then returns to step 706 of the state management method of Figure 8. If a cluster state change is not required on the basis of the cluster rules fired in step 704d (No at step 704e), the cluster head returns directly to step 706. The cluster head thus executes its functions as cluster head before checking its own state with reference to the cluster state in steps 706 to 718 of Figure 8.

The process of Figures 8 and 9 may be run at periodic intervals of for example 10 seconds. Other time periods may be selected according to the particular network conditions, management application etc. The process of Figure 8 may also be triggered by certain events including network events such as the addition of a network element or cluster events such as the addition of a cluster member. In some examples it may be desirable to impose periodic updates to ensure ordered coordination between cluster members. In this manner, any network or cluster additions taking place since the last time the sequence was run are accounted for in the next running of the process.

Figures 8 and 9 illustrate how the functionality described with reference to Figures 1 and 2 may be achieved. A member of the cluster operates as cluster head, selected on the basis of algorithms which each cluster member may run on the basis of data shard within the cluster. The cluster head monitors cluster processing load and updates cluster status if this is warranted by the processing load, as determined by domain and cluster rules. The cluster members detect an updated cluster state and execute the necessary operations to follow the cluster state, allowing for subsequent load balancing.

The above discussion uses the example of load balancing between a cluster subset that includes all members of the cluster. However, as previously mentioned, load balancing among a cluster subset including only some cluster members may also be conducted. For example it may be determined during the cluster state check process of Figure 9 that a small number of cluster members are heavily loaded and that some cluster members are lightly loaded. In this case, the cluster head may order partial load balancing across only the affected set of cluster members using a *partially_suspended* state. The cluster head may set the cluster state to *partially_suspended* and set the cluster data to indicate the cluster members that should execute load balancing. During the state management process of Figure 8, on determining that the cluster state has been updated to *partially_suspended,* a cluster member may first check if it should partake in a load balancing state change and only if this is the case, execute the transition from *running* to *partially_suspended* and from *partially_suspended* to *running* by following the cluster state. The operations to transition from *running* to *partially_suspended* and back to *running* may be the same as those to transition from *running* to *suspended* and back to *running.*

The subset amongst which load balancing is to be performed may also be adjusted by the addition of members from a pool or removal of members to a pool. Such a pool of cluster members may be used to alleviate rapid increases in load. A set of started cluster members may be held in the pool, with no load allocated to them. When a rapid increase in load occurs, some of the management load may be transferred to cluster members in the pool. When load decreases, cluster members may be returned to the pool. The minimum and maximum size of the pool, and the block size for increasing and decreasing the pool may be configurable. When the pool size decreases below its minimum size, new cluster members may be started and added to the pool. When the pool size increases above its maximum, cluster members may be stopped and removed from the pool.

Figure 10 illustrates an example operation of the method for distribution of network management processing load described herein. In the example of Figure 10, a management application is executing, and is using six autonomous cluster members, M1 to M6 to process its management load.

At time *t₀,* the cluster and all cluster members have state *stopped.* The application starts at time *t₁* with the cluster members starting up using the procedure of Figure 6a.

One of the cluster members determines that it is to operate as cluster head and sets the cluster state to *running* at time *t₁*. The periodic process of cluster members M1 to M6, detailed in Figure 8, allows the cluster members to read the cluster state change and trigger execution of their operations to transition from state *stopped* to state *running.* In the present example, load balancing is executed as part of the transition to state *running,* and a load-balancing algorithm is thus executed in each member, which allocates a portion of the managed network elements to each member. Following execution of the load-balancing algorithm, each member establishes management sessions towards the network elements in question, begins execution of management tasks towards those network elements and sets its state to *running.* By time *t₂,* all cluster members have state *running.*

From time *t₂* to time *t₃*, the application executes as normal; no load balancing is performed. At time *t₃*, the cluster head detects, through the process of Figure 9, that network elements have been added to the network and it sets the cluster state to *suspended.* The periodic process of Figure 8, carried out by cluster members M1 to M6 causes the cluster members to read the cluster state change and trigger execution of their operations to transition from state *running* to state *suspended.* Each member orders completion of management tasks and suspends initiation of any new tasks. Once tasks have stopped, each member sets its state to *suspended.* By time *t₄,* all cluster members have state *suspended.*

The cluster head again sets the cluster state to *running* at time *t₅*. The periodic processes of cluster members M1 to M6 once again read the cluster state change and trigger execution of their operations to transition from state *suspended* to state *running.* Load balancing is again executed as part of the transition to state *running* and sessions towards network elements are established again. By time *t₆,* all cluster members have state *running.*

From time *t₆* to time *t₇*, the application executes as normal; no load balancing is performed. At time *t₇*, the cluster head detects, through the process of Figure 9, that the cluster load is unbalanced, and sets the cluster state to *suspended.* The periodic processes of cluster members M1 to M6 read this change and execute the transition to state *suspended.* By time *t₈*, all cluster members have state *suspended.* The cluster head again sets the cluster state to *running* at time *t₉* and by time *t₁₀,* all cluster members have again transitioned to state *running.*

According to a variation of the above example, load balancing may be carried out once cluster members M1 to M6 establish from the shared data that each other member has set its state to *suspended.* Each member may then set a flag once it has finished load balancing. Once all flags are set, the cluster head sets the cluster state to *running* and this is followed by the cluster members.

The above described method may be used for load balancing of processing load for a wide range of management applications. One example includes the collection and processing of events from network elements. In such a management application, network elements may be added to or removed from the network at any time. Many instances of a distributed management system are used to collect and process events from the individual network elements and the number of instances running at any given time may vary based on the current network size, the current event load, as a result of failure of particular instances. The load balancing method described herein may be used in such a system to balance the management load fairly across all running instances.

Aspects of the present invention thus provide a method enabling management applications to automatically balance their processing load across many distributed instances in an autonomous manner. The use of cooperating clusters in which one member acts as a cluster head, and cluster members follow the state of the cluster head, enables management applications to automatically handle changes to the domain such as addition or removal of network elements, and to automatically adjust its load across currently running instances. Addition or removal of management instances may also be automatically accounted for to accommodate changes in processing load and optimise power consumption or following failure of an application instance.

Examples of the present invention offer both robustness and flexibility. Once two or more instances of a management application are running according to aspects of the present invention, no one single point of failure exists, as failure of any instance will be compensated for by balancing among the remaining instances. Failure of the cluster head instance will simply result in a new member determining that it is to operate as cluster head next time the periodic process of Figure 8 is run.

Examples of the present invention are highly configurable: the domain and cluster rules for triggering load balancing may be set and amended at each run of the state management process. The load balancing algorithm used by cluster members can range from simple to highly complex, and can also be amended at run time. In addition, the method is applicable to a wide range of applications designed to run across distributed instances.

It should be noted that the above-mentioned examples illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method of distributing network management processing load across a plurality of network management processing elements, each network management processing element being a member of a cluster, one member being a head of the cluster updating the cluster state, and members of the cluster following the cluster state, the method **characterised in that** the method comprises:
the cluster head monitoring the network management processing load across the members of the cluster (110); and
upon detecting that the cluster load is unbalanced (120), the cluster head updating the cluster state to initiate automatic rebalancing of the network management processing load across at least a subset of the plurality of members of the cluster (130) once tasks being processed by the subset of the plurality of members have been completed.

2. A method according to claim 1, wherein the step of rebalancing the network management processing load comprises:
suspending operation of each member of the subset of the plurality of members upon completion of processing of current tasks (134);
automatically rebalancing the network management processing load upon suspension of all members of the subset (138).

3. A method according to claim 2, wherein the step of automatically rebalancing the load (138) comprises:
adding network management processing elements to the subset from a pool of started members of the cluster, or
removing network management processing elements from the subset to the pool of started members of the cluster.

4. A method according to claim 2 or 3, wherein the step of automatically rebalancing the load (138) comprises at least one member of the subset running a load balancing algorithm to set the network management processing load handled by said network management processing element according to processing load data shared between cluster members.

5. A method according to any one of the preceding claims, wherein the method further comprises:
detecting that the cluster has changed state from a first state to a second state (706);
changing the state of members of the cluster from the first state to the second state (712) once tasks being processed have been completed.

6. A method according to claim 5, wherein the step of changing the state of cluster members comprises:
suspending operation of members upon completion of processing of current tasks;
changing the state of members of the cluster from the first state to the second state (712).

7. A method of distributing the processing for controlling a communication network, the network comprising a plurality of nodes, the network being controlled by a cluster of a plurality of processing elements, each processing element being a member of a cluster, one member being a head of the cluster updating the cluster state, and members of the cluster following the cluster state, the method comprising the steps according to any one of claims 1 to 6.

8. A network management processing element (200) operating as cluster head of a cluster comprising a plurality of network management processing elements operating as members of the cluster, the network management processing element (200) **characterised in that** the network management processing element (200) comprises:
a monitor (292) configured to monitor a network management processing load across the members of the cluster, and
a cluster state manager (294) configured to update a cluster state on detecting that the monitored network processing load is unbalanced to initiate automatic rebalancing of the network management processing load across at least a subset of the plurality of members of the cluster.

9. A network management processing element (300) operating as a member of a cluster comprising a plurality of network management processing elements, one member of the cluster being a head of the cluster configured to update the cluster state; the network management processing element (300) **characterised in that** the network management processing element (300) comprises a processor (355) and a memory (365), the memory containing instructions executable by the processor (355) whereby the network management processing element (300) is operative to:
detect updating of the cluster state; and
rebalance a network management processing load handled by the network management processing element (300) with reference to at least a subset of the plurality of members of the cluster once tasks being processed by the subset of the plurality of members have been completed.

10. A network management processing element (300) as claimed in claim 9, wherein the network management processing element (300) is further operative to:
suspend operation of the element.

11. A network management processing element according to claim 9 or 10, wherein the network management processing element (300) is further operative to:
detect that the cluster has changed state from a first state to a second state; and
change the state of the network management processing element (300) from the first state to the second state once tasks being processed have been completed.

12. A network management processing element according to any one of claims 9 to 11, wherein the network management processing element (300) is further operative to:
run a load balancing algorithm to set the network management processing load handled by said network management processing element (300) according to processing load data shared between cluster members.

13. A network management processing element (300) according to any one of claims 9 to 12, wherein the network management processing element (300) is further operative to:
check the cluster state on occurrence of a trigger event, wherein a trigger event comprises at least one of expiry of a time period or a network event.

14. A network management processing element (300) according to any one of claims 9 to 13, wherein the network management processing element (300) is further operative to:
monitor the network management processing load across the members of the cluster, and
update the cluster state on detecting that the monitored network processing load is unbalanced.

15. A network management processing element (300) according to claim 14, wherein the network management processing element (300) is further operative to:
determine if the network management processing element (300) is to operate as the cluster head.

## Patentansprüche

1. Verfahren zur Verteilung von Netzwerkmanagement-Verarbeitungslast über eine Mehrzahl von Netzwerkmanagement-Verarbeitungselementen, wobei jedes Netzwerkmanagement-Verarbeitungselement ein Mitglied eines Clusters ist, ein Mitglied ein Kopf des Clusters ist, der den Clusterzustand aktualisiert, und Mitglieder des Clusters dem Clusterzustand folgen, wobei das Verfahren **dadurch gekennzeichnet ist, dass** das Verfahren umfasst, dass:
der Clusterkopf die Netzwerkmanagement-Verarbeitungslast über die Mitglieder des Clusters (110) überwacht; und
der Clusterkopf bei Erkennen, dass die Clusterlast unausgeglichen ist (120), den Clusterzustand aktualisiert, um automatisches Wiederausgleichen der Netzwerkmanagement-Verarbeitungslast über wenigstens einen Teilsatz der Mehrzahl von Mitgliedern des Clusters zu initiieren (130), sobald Aufgaben, die durch den Teilsatz der Mehrzahl von Mitgliedern verarbeitet werden, abgeschlossen wurden.

2. Verfahren nach Anspruch 1, wobei der Schritt des Wiederausgleichens der Netzwerkmanagement-Verarbeitungslast umfasst:
Unterbrechen des Betriebs jedes Mitglieds des Teilsatzes der Mehrzahl von Mitgliedern bei Abschluss der Verarbeitung aktueller Aufgaben (134);
automatisches Wiederausgleichen der Netzwerkmanagement-Verarbeitungslast bei Unterbrechung aller Mitglieder des Teilsatzes (138).

3. Verfahren nach Anspruch 2, wobei der Schritt des automatischen Wiederausgleichens der Last (138) umfasst:
Hinzufügen von Netzwerkmanagement-Verarbeitungselementen zum Teilsatz aus einem Pool von Anfangsmitgliedern des Clusters oder
Hinzufügen von Netzwerkmanagement-Verarbeitungselementen aus dem Teilsatz zum Pool von Anfangsmitgliedern des Clusters.

4. Verfahren nach Anspruch 2 oder 3, wobei der Schritt des automatischen Wiederausgleichens der Last (138) umfasst, dass mindestens ein Mitglied des Teilsatzes einen Lastausgleichsalgorithmus ausführt, um die Netzwerkmanagement-Verarbeitungslast, die vom Netzwerkmanagement-Verarbeitungselement gehandhabt wird, gemäß Verarbeitungslastdaten festzulegen, die zwischen Clustermitgliedern ausgetauscht werden.

5. Verfahren nach einem der vorhergehenden Ansprüche, wobei das Verfahren ferner umfasst:
Erkennen, dass der Cluster einen Zustand von einem ersten Zustand in einen zweiten Zustand geändert hat (706) ;
Ändern des Zustands von Mitgliedern des Clusters vom ersten Zustand in den zweiten Zustand (712), sobald Aufgaben, die verarbeitet werden, abgeschlossen wurden.

6. Verfahren nach Anspruch 5, wobei der Schritt des Änderns des Zustands der Clustermitglieder umfasst:
Unterbrechen des Betriebs von Mitgliedern bei Abschluss der Verarbeitung aktueller Aufgaben;
Ändern des Zustands von Mitgliedern des Clusters vom ersten Zustand in den zweiten Zustand (712).

7. Verfahren zur Verteilung der Verarbeitung zum Steuern eines Kommunikationsnetzwerks, wobei das Netzwerk eine Mehrzahl von Knoten umfasst, das Netzwerk durch einen Cluster einer Mehrzahl von Verarbeitungselementen gesteuert wird, jedes Verarbeitungselement ein Mitglied eines Clusters ist, ein Mitglied ein Kopf des Clusters ist, der den Clusterzustand aktualisiert, und Mitglieder des Clusters dem Clusterzustand folgen, wobei das Verfahren die Schritte nach einem der Ansprüche 1 bis 6 umfasst.

8. Netzwerkmanagement-Verarbeitungselement (200), das als Clusterkopf eines Clusters fungiert, der eine Mehrzahl von Netzwerkmanagement-Verarbeitungselementen umfasst, die als Mitglieder des Clusters fungieren, wobei das Netzwerkmanagement-Verarbeitungselement (200) **dadurch gekennzeichnet ist, dass** das Netzwerkmanagement-Verarbeitungselement (200) umfasst:
eine Überwachungseinrichtung (292), die zum Überwachen der Netzwerkmanagement-Verarbeitungslast über die Mitglieder des Clusters konfiguriert ist, und
einen Clusterzustandsmanager (294), der so konfiguriert ist, dass er bei Erkennen, dass die überwachte Netzwerkverarbeitungslast unausgeglichen ist, einen Clusterzustand aktualisiert, um automatisches Wiederausgleichen der Netzwerkmanagement-Verarbeitungslast über wenigstens einen Teilsatz der Mehrzahl von Mitgliedern des Clusters zu initiieren.

9. Netzwerkmanagement-Verarbeitungselement (300), das als ein Mitglied eines Clusters fungiert, der eine Mehrzahl von Netzwerkmanagement-Verarbeitungselementen umfasst, ein Mitglied ein Kopf des Custers ist, der zum Aktualisieren des Clusterzustands konfiguriert ist; das Netzwerkmanagement-Verarbeitungselement (300) **dadurch gekennzeichnet ist, dass** das Netzwerkmanagement-Verarbeitungselement (300) einen Prozessor (355) und einen Speicher (365) umfasst, der Speicher Anweisungen enthält, die vom Prozessor (355) ausgeführt werden, wodurch das Netzwerkmanagement-Verarbeitungselement (300) ausgelegt ist zum:
Erkennen einer Aktualisierung des Clusterzustands; und
Wiederausgleichen einer Netzwerkmanagement-Verarbeitungslast, die vom Netzwerkmanagement-Verarbeitungselement (300) gehandhabt wird, in Bezug auf wenigstens einen Teilsatz der Mehrzahl von Mitgliedern des Clusters, sobald Aufgaben, die durch den Teilsatz der Mehrzahl von Mitgliedern verarbeitet werden, abgeschlossen wurden.

10. Netzwerkmanagement-Verarbeitungselement (300) nach Anspruch 9, wobei das Netzwerkmanagement-Verarbeitungselement (300) ferner ausgelegt ist zum:
Unterbrechen des Betriebs des Elements.

11. Netzwerkmanagement-Verarbeitungselement (300) nach Anspruch 9 oder 10, wobei das Netzwerkmanagement-Verarbeitungselement (300) ferner ausgelegt ist zum:
Erkennen, dass der Cluster einen Zustand von einem ersten Zustand in einen zweiten Zustand geändert hat;
Ändern des Zustands des Netzwerkmanagement-Verarbeitungselements (300) vom ersten Zustand in den zweiten Zustand, sobald Aufgaben, die verarbeitet werden, abgeschlossen wurden.

12. Netzwerkmanagement-Verarbeitungselement (300) nach einem der Ansprüche 9 bis 11, wobei das Netzwerkmanagement-Verarbeitungselement (300) ferner ausgelegt ist zum:
Ausführen eines Lastausgleichalgorithmus, um die Netzwerkmanagement-Verarbeitungslast, die vom Netzwerkmanagement-Verarbeitungselement (300) gehandhabt wird, gemäß Verarbeitungslastdaten festzulegen, die zwischen den Clustermitgliedern ausgetauscht werden.

13. Netzwerkmanagement-Verarbeitungselement (300) nach einem der Ansprüche 9 bis 12, wobei das Netzwerkmanagement-Verarbeitungselement (300) ferner ausgelegt ist zum:
Prüfen des Clusterzustands bei Eintreten eines Auslöseereignisses, wobei ein Auslöseereignis mindestens eines von einem Ablauf einer Zeitdauer oder einem Netzwerkereignis umfasst.

14. Netzwerkmanagement-Verarbeitungselement (300) nach einem der Ansprüche 9 bis 13, wobei das Netzwerkmanagement-Verarbeitungselement (300) ferner ausgelegt ist zum:
Überwachen der Netzwerkmanagement-Verarbeitungslast über die Mitglieder des Clusters, und
Aktualisieren des Clusterzustands bei Erkennen, dass die überwachte Netzwerkverarbeitungslast unausgeglichen ist.

15. Netzwerkmanagement-Verarbeitungselement (300) nach Anspruch 14, wobei das Netzwerkmanagement-Verarbeitungselement (300) ferner ausgelegt ist zum:
Bestimmen, ob das Netzwerkmanagement-Verarbeitungselement (300) als Clusterkopf fungieren soll.

## Revendications

1. Procédéc de répartition de charge de traitement de gestion de réseau entre une pluralité d'éléments de traitement de gestion de réseau, chaque élément de traitement de gestion de réseau étant un membre d'un groupement, un membre étant une tête du groupement mettant à jour l'état de groupement, et des membres du groupement suivant l'état de groupement, le procédé étant **caractérisé en ce que** le procédé comprend :
la tête de groupement surveillant la charge de traitement de gestion de réseau entre les membres du groupement (110) ; et
à la détection que la charge de groupement est déséquilibrée (120), la tête de groupement mettant à jour l'état de groupement pour lancer un rééquilibrage automatique de la charge de traitement de gestion de réseau entre au moins un sous-ensemble de la pluralité de membres du groupement (130) une fois que des tâches en cours de traitement par le sous-ensemble de la pluralité de membres sont terminées.

2. Procédé selon la revendication 1, dans lequel l'étape du rééquilibrage de la charge de traitement de gestion de réseau comprend :
la suspension du fonctionnement de chaque membre du sous-ensemble de la pluralité de membres à la fin du traitement de tâches en cours (134) ;
le rééquilibrage automatique de la charge de traitement de gestion de réseau à la suspension de tous les membres du sous-ensemble (138).

3. Procédé selon la revendication 2, dans lequel l'étape du rééquilibrage automatique de la charge (138) comprend :
l'ajout d'éléments de traitement de gestion de réseau au sous-ensemble à partir d'un groupe de membres démarrés du groupement, ou
la suppression d'éléments de traitement de gestion de réseau du sous-ensemble dans le groupe de membres démarrés du groupement.

4. Procédé selon la revendication 2 ou 3, dans lequel l'étape du rééquilibrage automatique de la charge (138) comprend au moins un membre du sous-ensemble exécutant un algorithme d'équilibrage de charge pour régler la charge de traitement de gestion de réseau assumée par ledit élément de traitement de gestion de réseau en fonction de données de traitement de charge partagées entre des membres de groupement.

5. Procédé selon l'une quelconque des revendications précédentes, dans lequel le procédé comprend en outre :
la détection que le groupement a changé d'état d'un premier état à un deuxième état (706) ;
le changement de l'état de membres du groupement du premier état au deuxième état (712) une fois que des tâches en cours de traitement sont terminées.

6. Procédé selon la revendication 5, dans lequel l'étape du changement de l'état de membres de groupement comprend :
la suspension du fonctionnement de membres à la fin du traitement de tâches en cours ;
le changement de l'état de membres du groupement du premier état au deuxième état (712).

7. Procédé de répartition du traitement pour commander un réseau de communication, le réseau comprenant une pluralité de noeuds, le réseau étant commandé par un groupement d'une pluralité d'éléments de traitement, chaque élément de traitement étant un membre d'un groupement, un membre étant une tête du groupement mettant à jour l'état de groupement, et des membres du groupement suivant l'état de groupement, le procédé comprenant les étapes selon l'une quelconque des revendications 1 à 6.

8. Elément de traitement de gestion de réseau (200) fonctionnant en tant que tête de groupement d'un groupement comprenant une pluralité d'éléments de traitement de gestion de réseau fonctionnant en tant que membres du groupement, l'élément de traitement de gestion de réseau (200) étant **caractérisé en ce que** l'élément de traitement de gestion de réseau (200) comprend :
un moniteur (292) configuré pour effectuer la surveillance d'une charge de traitement de gestion de réseau entre les membres du groupement, et
un gestionnaire d'état de groupement (294) configuré pour effectuer la mise à jour d'un état de groupement, à la détection que la charge de traitement de réseau surveillée est déséquilibrée, pour lancer un rééquilibrage automatique de la charge de traitement de gestion de réseau entre au moins un sous-ensemble de la pluralité de membres du groupement.

9. Elément de traitement de gestion de réseau (300) fonctionnant en tant qu'un membre d'un groupement comprenant une pluralité d'éléments de traitement de gestion de réseau, un membre du groupement étant une tête du groupement configurée pour mettre à jour l'état de groupement ; l'élément de traitement de gestion de réseau (300) étant **caractérisé en ce que** l'élément de traitement de gestion de réseau (300) comprend un processeur (355) et une mémoire (365), la mémoire contenant des instructions exécutables par le processeur (355) de telle manière que l'élément de traitement de gestion de réseau (300) soit opérationnel pour effectuer :
la détection de la mise à jour de l'état de groupement ; et
le rééquilibrage d'une charge de traitement de gestion de réseau assumée par l'élément de traitement de gestion de réseau (300) par rapport à au moins un sous-ensemble de la pluralité de membres du groupement une fois que des tâches en cours de traitement par le sous-ensemble de la pluralité de membres sont terminées.

10. Elément de traitement de gestion de réseau (300) selon la revendication 9, dans lequel l'élément de traitement de gestion de réseau (300) est en outre opérationnel pour effectuer :
la suspension du fonctionnement de l'élément.

11. Elément de traitement de gestion de réseau selon la revendication 9 ou 10, dans lequel l'élément de traitement de gestion de réseau (300) est en outre opérationnel pour effectuer :
la détection que le groupement a changé d'état d'un premier état à un deuxième état ; et
le changement de l'état de l'élément de traitement de gestion de réseau (300) du premier état au deuxième état une fois que des tâches en cours de traitement sont terminées.

12. Elément de traitement de gestion de réseau selon l'une quelconque des revendications 9 à 11, dans lequel l'élément de traitement de gestion de réseau (300) est en outre opérationnel pour effectuer :
l'exécution d'un algorithme d'équilibrage de charge pour régler la charge de traitement de gestion de réseau assumée par ledit élément de traitement de gestion de réseau (300) en fonction de données de traitement de charge partagées entre des membres de groupement.

13. Elément de traitement de gestion de réseau (300) selon l'une quelconque des revendications 9 à 12, dans lequel l'élément de traitement de gestion de réseau (300) est en outre opérationnel pour effectuer :
le contrôle de l'état de groupement à la survenance d'un événement de déclenchement, dans lequel un événement de déclenchement comprend au moins l'un d'une expiration d'une période de temps ou d'un événement de réseau.

14. Elément de traitement de gestion de réseau (300) selon l'une quelconque des revendications 9 à 13, dans lequel l'élément de traitement de gestion de réseau (300) est en outre opérationnel pour effectuer :
la surveillance de la charge de traitement de gestion de réseau entre les membres du groupement, et
la mise à jour de l'état de groupement à la détection que la charge de traitement de réseau surveillée est déséquilibrée.

15. Elément de traitement de gestion de réseau (300) selon la revendication 14, dans lequel l'élément de traitement de gestion de réseau (300) est en outre opérationnel pour effectuer :
la détermination si l'élément de traitement de gestion de réseau (300) doit fonctionner en tant que la tête de groupement.
